# EUROPEAN PATENT APPLICATION

(11) **EP 3 327 542 A1**
(43) Date of publication of application: **30.05.2018**
(21) Application number: 16200862.7
(22) Date of filing: 28.11.2016
(51) Int. Cl.: G06F 1/16, G06F 3/038, H02J 5/00, H04N 21/422

(54) **SYSTEM AND METHOD FOR SWITCHING BETWEEN STATES**

(71) Applicant: Advanced Digital Broadcast S.A., 1292 Geneva (CH)
(72) Inventor: Cichonski, Dariusz, 65-119 Zielona Gora (PL); Lipczynski, Jacek, 65-119 Zielona Gora (PL)
(74) Representative: Blonski, Pawel

(57) **Abstract**

Method for switching between states, the method being characterized in that it comprises the step of: selecting (701) a given axis of a user's device (310, 270) as its reference axis, the position of which will be checked against the direction to a reference point; selecting (703) a given axis of a receiver (220) as its reference axis the position of which will be checked against the direction to the reference point; determining (705) the user's device (310, 270) proximity to the receiver (220); when said user's device (310, 270) is in proximity to the receiver (220), obtaining (706) by the receiver (220) information on the user's device (310, 270) orientation with respect to its reference point; determining (707), by the receiver (220), based on its known orientation, orientation of the user's device (310, 270) with respect to the orientation of the receiver (220) and obtaining a relative angle between the user's device (310, 270) and the receiver (220); and based on that relative angle, executing (708) an associated action (641 D).

## Description

### TECHNICAL FIELD

The present invention relates to a system and method for switching between states. In particular the present invention relates to easily configurable parameters of a standby mode.

### BACKGROUND OF THE INVENTION

Prior art defines a standby mode or a low-power mode, wherein, in which an electronic device selectively adjusts operation of, or disables, one or more circuits of the electronic device, thereby reducing power consumption of the electronic device.

It would be advantageous to present an easily configurable, multi-state modes activation of which would not be troublesome for users.

The aim of the development of the present invention is an improved and easily controllable method and apparatus for switching between states.

### SUMMARY AND OBJECTS OF THE PRESENT INVENTION

An object of the present invention is a method for switching between states, the method being characterized in that it comprises the step of: selecting a given axis of a user's device as its reference axis, the position of which will be checked against the direction to a reference point; selecting a given axis of a receiver as its reference axis the position of which will be checked against the direction to the reference point; determining the user's device proximity to the receiver; when said user's device is in proximity to the receiver, obtaining by the receiver information on the user's device orientation with respect to its reference point; determining, by the receiver, based on its known orientation, orientation of the user's device with respect to the orientation of the receiver and obtaining a relative angle between the user's device and the receiver; and based on that relative angle, executing an associated action.

Preferably, the reference point is common for both the receiver and the user's device in case each of them comprises a magnetometer.

Preferably, either reference axis has an assigned direction.

Preferably, said proximity is considered detected when said user's device is connected to a wireless charger of the receiver.

Preferably, the associated action is executed either by the receiver or by the user's device or both devices may execute respectively associated actions.

Preferably, it further comprises a step of providing a display, presenting at its perimeter indications of commands associated with different positions of the user's device with respect to the receiver.

Preferably, it further comprises a step of signaling, by the receiver, that said associated function has been executed.

Another object of the present invention is a system for switching between states, the system comprising: means for determining orientation of the system; a memory configured to store program code for a controller the system further comprising the controller, is configured to execute all steps of the method according to the present invention.

Preferably, the system comprises, on its operating surface, a display configured to present, at its perimeter, indications of commands associated with different positions of a user's device with respect to the system.

Preferably, the display has a shape of a ring wherein the central area is empty.

Preferably, said empty area is configured to receive said user's device for wireless charging by a wireless charger.

Preferably, said means for determining orientation of the system comprises a magnetometer while the user's device comprises a magnet.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for switching between states. Further details and features of the present invention, its nature and various advantages will become more apparent from the following detailed description of the preferred embodiments shown in a drawing, in which:
Fig. 1 presents an overview of a general content distribution system;
Fig. 2 presents an overview of a content distribution system at a user premises;
Fig. 3 presents a diagram of an audio/video system controlled with a remote control unit;
Fig. 4A presents a typical setup of a mobile device;
Fig. 4B presents a sensors unit of the mobile device;
Fig. 4C presents the communication module of the mobile device;
Fig. 5 presents an exemplary remote control unit (RCU);
Fig. 6A presents a block diagram of a stationary device, such as a set top box or a set back box;
Fig. 6B depicts content of a receiver's memory;
Fig. 7 shows a process of determining relative positioning between a receiver and a user's device;
Figs. 8A-8C present a receiver wherein a user's device is positioned on the top portion of the receiver;
Fig. 9 depicts a high level process implemented by the present invention;
Fig. 10A and Fig. 10B show a more detailed version of Fig. 9.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

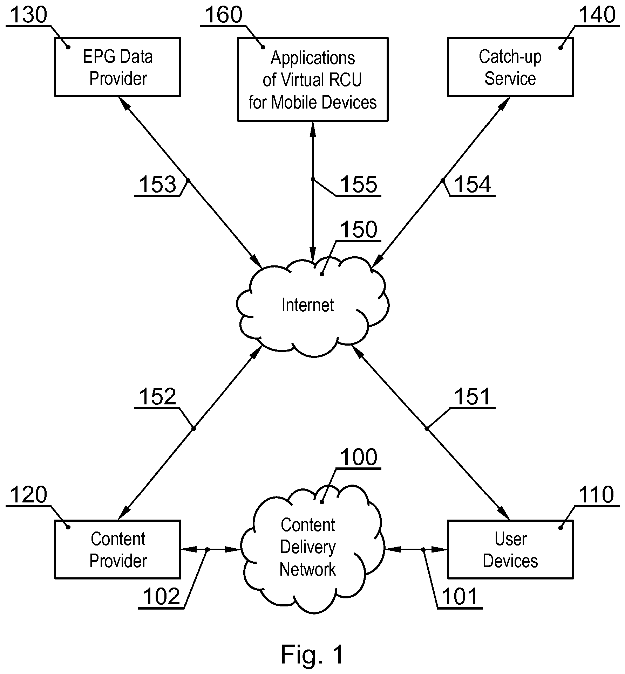

Fig. 1 presents an overview of a general content distribution system. Content can be provided to user devices 110 by various distributors from various sources. A content provider 120 may provide linear TV content, such as time-and-channel based television, live broadcasts etc., to a content delivery network 100, which may be broadcast, multicast or unicast (irrespective of a transmission channel being used).

The user is connected with the content delivery network via a transmission channel 101, such as a QAM, Satellite, Terrestrial, IP multicast network or other type of network. Additional services are available to the user devices 110 linked via a transmission channel 151 with the Internet 150 (or via the content provider 120 connected via a transmission channel 152 with the Internet and via a transmission channel 102 with the content delivery network 100) and include at least some of the following.

A catch-up service 140 is configured to provide, via a transmission channel 154, retransmission the content that has been already broadcast as linear TV, in order to allow the users to watch it a few hours or even days later.

An Electronic Program Guide (EPG) data provider 130 is configured to provide, via a transmission channel 153, additional data about content available from various sources, including the content available from a content delivery network and the other content providers. The EPG may also present advertisements in one or more of its operating display screens.

The transmission channels 153-155 may be of any known type, such as wired or wireless, using transmission technologies suitable to carry data of a particular service.

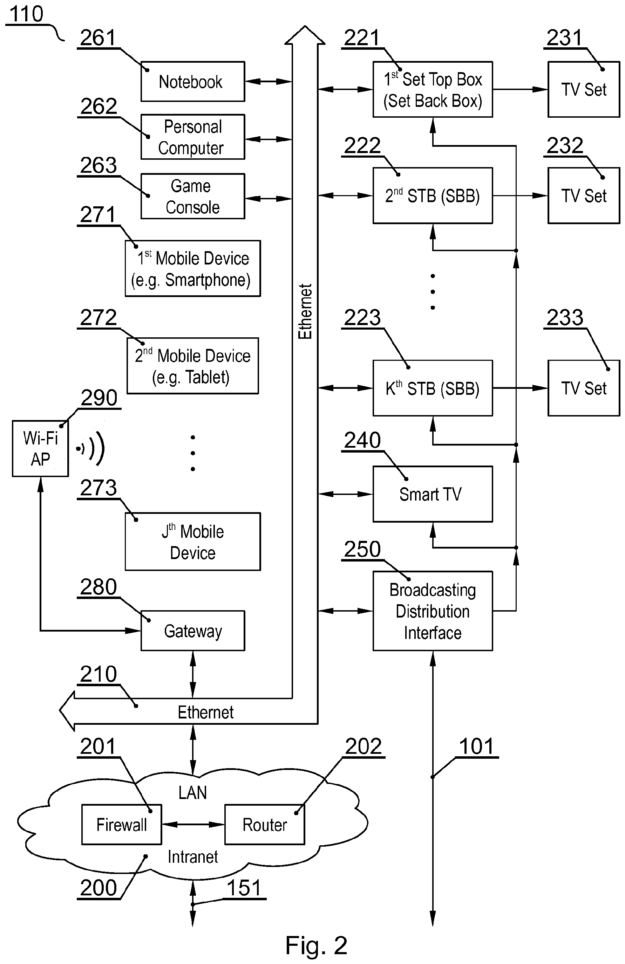

Fig. 2 presents an overview of a content distribution system at a user premises, such as at home or at an office. The user devices may be connected to an Intranet - a local area network (LAN) 200 via an interface such as Ethernet (IP) 210, which is connected with the Internet 150 via the transmission channel 151. The LAN 200 preferably includes a firewall 201 and a router 202 configured to secure and coordinate data transmission.

A gateway 280 may provide access to the Intranet 200 via a wireless access point (AP) 290, such as in Wi-Fi technology. A plurality of devices may be used in the user premises. Some of the devices may be mobile devices, such as a smartphone 271, a tablet 272 or another type of device 273. Other devices may be mobile or stationary and include devices such as a notebook computer 261, a personal computer 262, a Set Top Box (STB) or a Set Back Box (SBB) 221, 222, 223 connected to a television set 231, 232, 233, or a smart television set 240. A broadcasting distribution interface 250 may receive content from the content delivery network 100 via the transmission channel 101 and distribute it to the other devices via direct links or via the Ethernet interface.

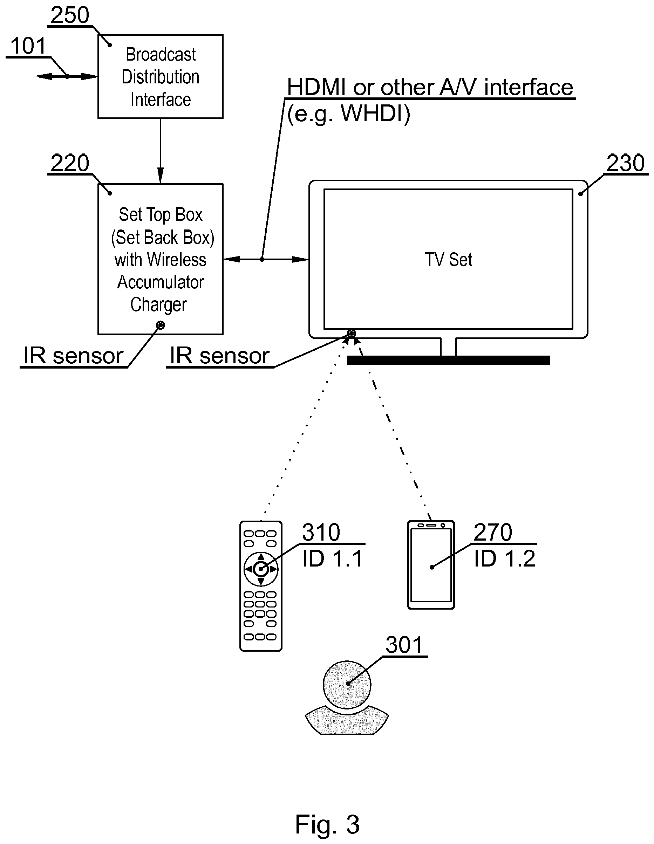

Fig. 3 presents a diagram of an exemplary audio/video system controlled with a remote control unit 310 or by any mobile device (e.g. smartphone or tablet 270, but not limited to, e.g. a remote control unit may control a light system in a room). The system comprises a source of an audio/video content such as the broadcast distribution interface 250 connected to a suitable signal feed 101. A suitable receiver, such as a set top box or a set back box 220, receives the audio/video signal and after suitable processing outputs the signal to a display such as a TV set 230.

The receiver 220 may be equipped with a wireless charger (such as Inductive charger) configured to charge a device in its proximity having a capability of wireless charging. The wireless charger could be also a stand-alone device having a possibility to communicate with the receiver 220.

Typically, both the set top box 220 and the TV set 230 are remotely operated by a dedicated remote control unit 310 or a mobile device such as a smartphone 270. This control is usually effected by means of any wireless transmission such as an infrared, electromagnetic transmission to an appropriate sensor and/or receiver.

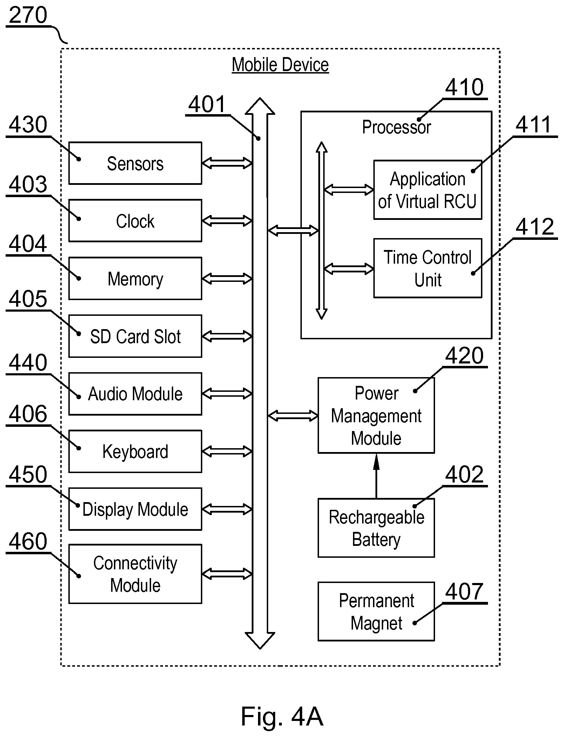

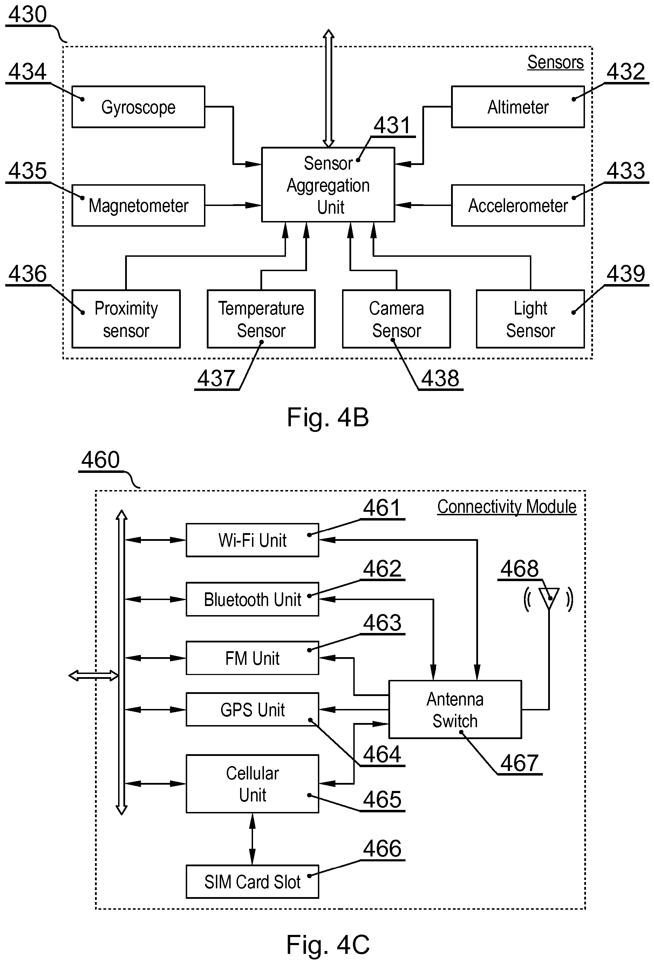

Fig. 4A presents a typical setup of a mobile device 270. The mobile device 270 comprises a connectivity module 460 responsible for receiving and/or transmitting data in a wireless fashion. Other typical modules include a memory 404 for storing data (including software, configuration and the like) as well as software executed by the processor 410, a clock module 403 configured to provide clock reference for other modules of the system, and a sensors module 430 encompassing at least one sensor as will be presented with reference to Fig. 4B.

Other, typical, but optional modules of the mobile device 270 are a display module 450 configured to display user interface to a user, a keyboard 406 operating as an input interface for the receiver, an audio module 440 configured to generate audible signals, an external memory slot such as an SD card slot 405 configured to receive and operate an external memory unit.

A suitable bidirectional data bus 401 may be employed in order to facilitate communication between modules and the processor 410. The processor 410 comprises an application of a virtual RCU 411 (allowing to use the mobile device as an RCU for a given electronic device 220 typically using a built in infrared or radio transmitter).

A mobile device may also comprise a power management module 420 cooperating with a battery 402.

The mobile device 270 also comprises means for determining its orientation e.g. permanent magnet 407 or magnetometer 435 (Fig 4B).

The aforementioned magnetometer 435 may be implemented using a Hall's sensor (otherwise known as Hall sensor or Hall effect sensor). Based on signals from such magnetometer 435, a device is able to determine the North direction (or a reference point in general). The North direction (North Magnetic Pole) is of course referenced to a given reference axis of the device. For example, in case a reference axis of the receiver 220 runs from the middle of its front panel and to the middle of its back panel, while the receiver 220 is positioned such that the reference axis points to the North, a user's device 270, 310 may be positioned on an operating surface (preferably its top portion) of said receiver 220 such that its reference axis points East, which will be appropriately detected.

Alternatively, either the receiver 220 or the user's device 270, 310 may comprise a magnet, which will serve as a reference point since it will be sufficiently stronger than the Earth's magnetic field, not to be influenced by it.

The device comprising the magnet (preferably the user's device 270, 310) does not need the Hall's sensor. When the user's device 270, 310 is positioned on the operating surface of the receiver 220 its magnet acts as a reference point and the means for determining orientation of the receiver 220 provide a new reading of an angle.

In case of the embodiment with a magnet, said magnet is preferably in proximity to an infrared transmitter diode, of the user's device 270, 310. In turn, the means for determining orientation of the receiver 220 are located in the geometric center of the operating surface of the receiver 220 (usually top cover) or as close as possible to this center.

Fig. 4B presents the sensors 430 unit of a mobile device 270 or RCU 310. The management of sensors may be aggregated by a sensors aggregation unit 431, which serves as a bridge between each of the set of sensors and a client requesting data from respective sensors. The sensors may be any one of or any subgroup of the following sensors: a proximity sensor 436, a temperature sensor 437, a light intensity sensor 439, an accelerometer 433, an altimeter 432, a gyroscope 434, a magnetometer 435, and a camera sensor 438. The aforementioned sensors operate according to principles known in the prior art and are frequently available in smartphones, especially high-end smartphones.

Fig. 4C presents the connectivity module 460. The communication means may be any one of or similar to the following: Wi-Fi 461, Bluetooth 462, FM 463, GPS 464, cellular communication unit 465 (such as GSM, 3G, 4G or similar) communicating with a SIM card slot 466, or similar. The different communication means may be managed by an antenna switch 467 connected to an antenna module 468 that may comprise one or more types of antennas.

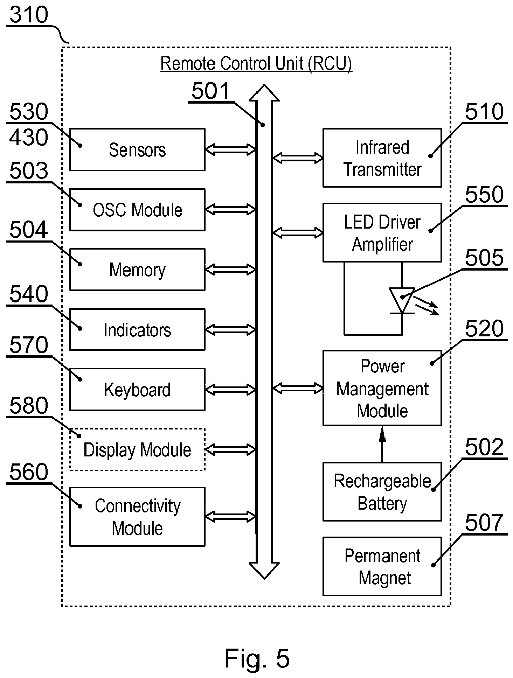

Fig. 5 presents an exemplary RCU 310. The RCU 310 comprises the main modules that are the same as in the mobile device 270 shown in Fig. 4A. The display module 580 is optional while typically some indicators 540 will be present on the RCU.

Further, an RCU 310 comprises an infrared transmitter 510 for transmitting commands to a suitable receiver. The infrared transmitter 510 is configured to work with an LED driver amplifier 505. Commands may be transmitted using the Connectivity Module 560 via one of the radio interfaces that are a part of this module.

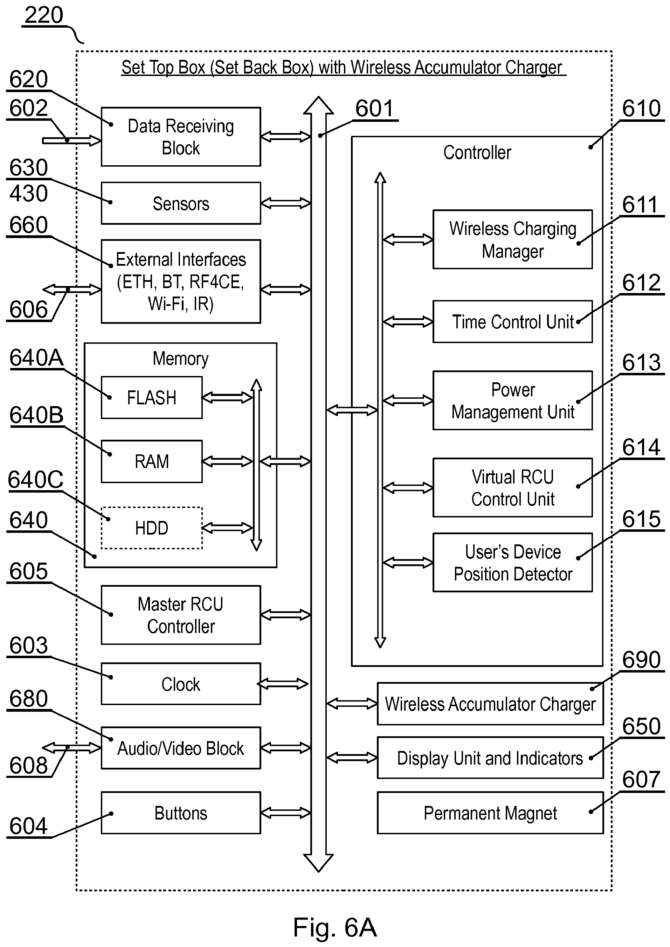

Fig. 6A presents a block diagram of a stationary device, such as a set top box or a set back box 220 wherein mainly the elements essential for operation of the system of the invention are shown.

The elements 601, 610, 604, 630, 603, 607 are equivalent to the elements 401, 410, 406, 430, 403, 407 described with reference to the mobile device 270 of Fig. 4A.

In addition, the memory block 640, for storing data (including software for the controller 610, configuration and the like), may further comprise a hard disk drive (HDD) 640C or another type of mass storage that can be used to store video or other data locally at the device, but is not essential for its operation.

A data receiving block 620 is configured to receive downstream data, such as audio/video content, from the broadcasting distribution interface via a channel 602 (101). The data receiving block 620 (also called a front-end block) may comprise a plurality of tuners (such as satellite, cable, terrestrial or IPTV tuners), wherein one of the tuners receives content to be displayed at the television screen to which the device is directly connected (e.g. the STB 220 connected to the TV set 230) and another tuner receives content to be recorded at the HDD 640C.

External interfaces 660, such as the Ethernet interface, are configured to communicate, via at least one transmission channel 606, with the Ethernet (IP) network or the wireless network, in order to receive applications and/or audio/video content recommendation data, as well as to transmit user or device statistic data. Those interfaces are used when receiving data or commands from an RCU or other mobile, user's devices. Received data may contain information about relative orientation of a given device with respect to the North Pole.

The device is operable by the user via a remote control unit (RCU) that communicates, typically via a wireless transmission channel, with an RCU controller block 605.

An audio/video block 680 is an example of a content presentation block and configured to decode the received content, convert it to an audio/video format suitable for presentation to the user, and transmit the converted content via a transmission channel to a TV set to which the device is directly connected.

The controller 610 may comprise a wireless charging manager 611 configured to control an optional wireless charger 690. Preferably such charger is positioned such that it may charge an RCU (user's device 270, 310) put on the top of the STB 220.

The Controller 610 comprises an application of a virtual RCU 614 (allowing to use the mobile device as an RCU for a given electronic device 220 typically using a built in infrared transmitter but other communication channels may be used as well).

A power management unit 613 is responsible for executing power saving routines that may be configured with respect to a detected mutual, spatial relation between the receiver 220 and one or more user's devices 270, 310.

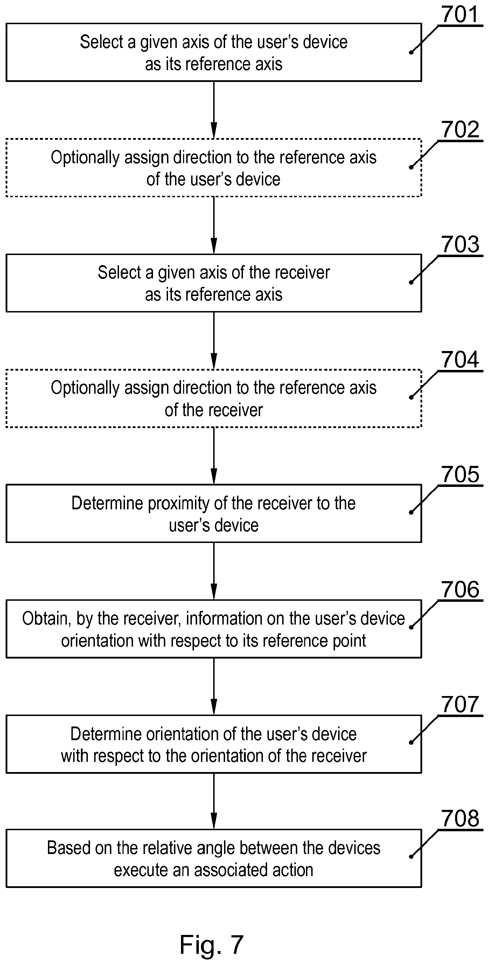

A user's device 270, 310 position detector 615 is configured to determine relative positioning between the receiver 220 and one or more user's devices 270, 310 on the basis of data received from Sensors 630 or 430 (530) and data received via External Interfaces module 660. This feature will be presented in more details with reference to Fig. 7.

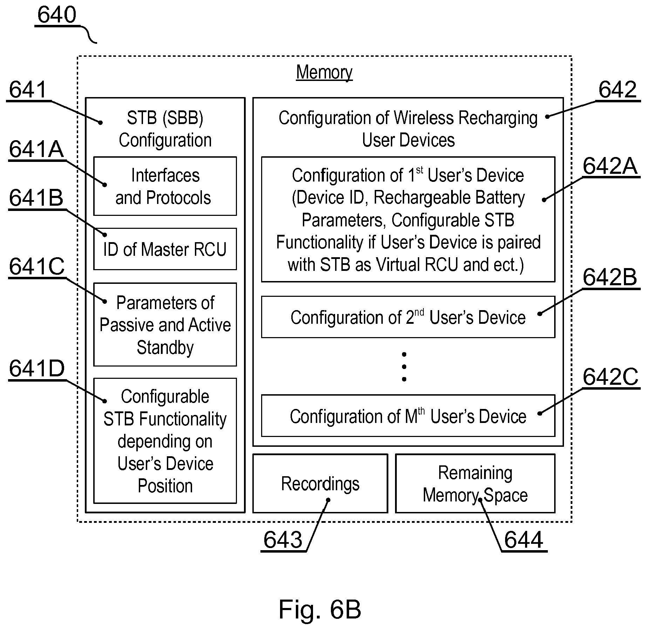

Fig. 6B presents content of the memory 640. The memory 640 may comprise a configuration 641 of the receiver 220 wherein said configuration 641 may comprise information on interfaces and protocols 641A, an identifier or identifiers of paired remote control units 641 B (different devices may use different communication protocols, and/or different commands within protocols; an identifier helps to differentiate between devices and facilitates association of different actions with different devices), parameters of passive/active standby modes 641C (for example: deep standby mode, standby, auto power down + time) as well as parameters of configurable receiver's 220 functions (A user may define action associated with a given user's device orientation with reference to the receiver 220. Such associations are parts of said configuration.) depending on user's device 310, 270 position/orientation with respect to the receiver's position/orientation 220.

Fig. 7 shows a process of determining relative positioning between a receiver and a user's device. It is to be noted that said position/orientation of the user's device 310, 270 with respect to the receiver's position/orientation 220, will typically involve selecting 701 a given axis of the user's device 310, 270 as its reference axis, the position of which will be checked against the direction to a reference point (be it the North Magnetic Pole or a local magnet). Similarly, there is selected 703 a given axis of the receiver 220 as its reference axis the position of which will be checked against the direction to the reference point (be it the North Magnetic Pole or a local magnet).

It is to be noted that the reference point is common for both the receiver 220 and the user's device 310, 270 in case each of them comprises a Hall's sensor.

Optionally, either reference axis may have an assigned direction 702, 704.

Further, the user's device 310, 270 proximity to the receiver 220 is determined 705, which may be simply determining that said user's device 310, 270 is connected to said wireless charger or using a suitable proximity sensor.

When said user's device 310, 270 is in proximity to the receiver 220, the system receives 706 from the user's device 310, 270 information on its orientation. Alternatively, the receiver 220 may detect said orientation of the user's device 310, 270. In either case, the receiver 220 obtains 706 information on the user's device 310, 270 orientation with respect to its reference point.

Subsequently, the receiver 220, based on its known orientation (which may be detected by orientation determining means), may determine orientation 707 of the user's device 310, 270 with respect to the orientation of the receiver 220.

This will typically result in obtaining a relative angle between the user's device 310, 270 and the receiver 220.

Based on that relative angle, an associated action 641 D may be executed 708. The associated action may be executed either by the receiver or by the user's device or both devices may execute some associated actions.

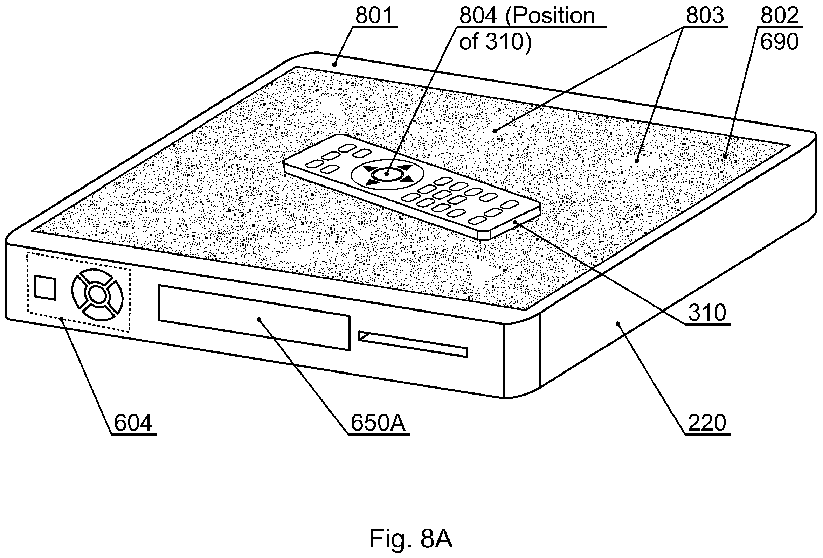

Figs. 8A - 8C show a receiver 220 wherein a user's device 270, 310 is positioned 804 on the operating surface 802 of the receiver 220. Preferably, in this arrangement, the proximity of the user's device 270, 310 to the receiver 220 may be detected. This may be effected by establishing a wireless charging process.

In order to help a user select particular arrangements of the user's device 270, 310 with respect to the receiver 220, the top portion 802 may have marking 803 or suitable displays 650B that may even display information on configured actions associated with a given positioning of the user's device 270, 310.

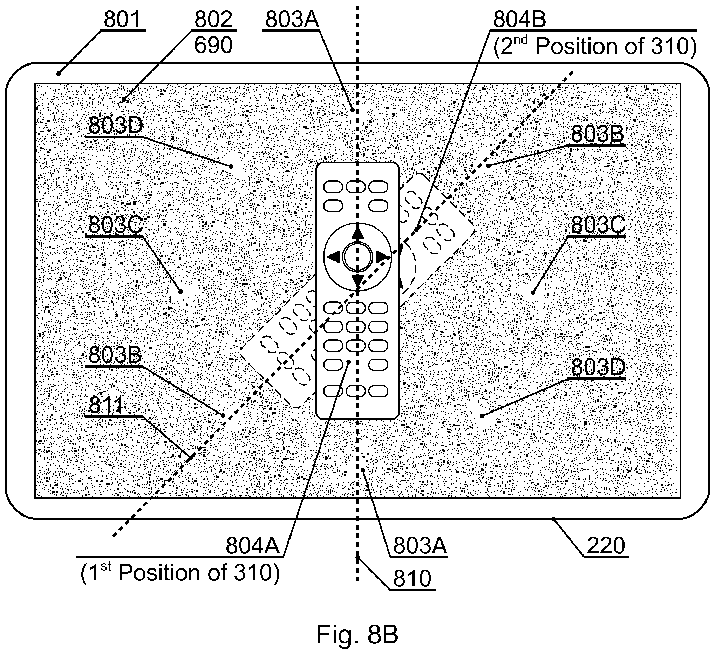

In Fig. 8B a plurality of markings 803 (803A - 803D) are shown. A user may position the user's device 270, 310 on the operating surface of the receiver 220 such that centers of the user's device 270, 310 and the receiver 220 are in proximity and an angle between a selected axis of the receiver 220 (typically an axis 810) and a selected axis of the user's device 270, 310 (typically an axis 811).

Each positioning (803A - 803D) of the user's device 270, 310 with respect to the receiver 220 may be associated with a different function, for example: power off, stand by, record current program and stand by, stand by after 1 hour has elapsed from the current time, continue normal operation with charging the RCU 310, and the like.

In one embodiment, opposite markings may refer to the same associated action 803C such that it is not required to check where the user's device 270, 310 is pointing (typically the pointing direction is determined by the direction in which the infrared transmitter of the RCU emits its signal).

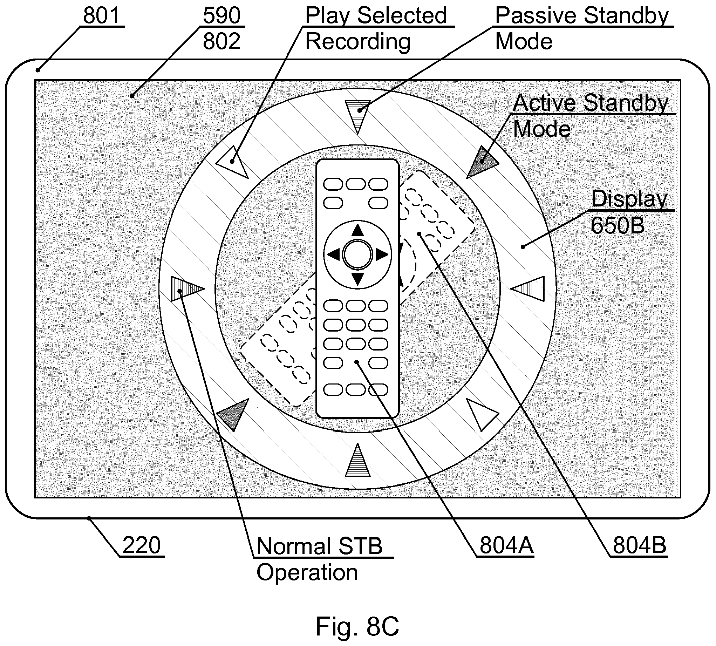

Fig. 8C presents an embodiment where a display 650B is present on the operating surface of the receiver 220. Such display may indicate different configured options associated with a relative arrangement of the receiver 220 with respect to the user's device 270, 310. The display has preferably a shape of a ring wherein the central area is empty in order to place the wireless charger therein. Other shapes than circular are possible, wherein such a display presents, at its perimeter, indications of commands associated with different positions of the user's device 270, 310 with respect to the receiver 220. Said indications may be text, icon or the like.

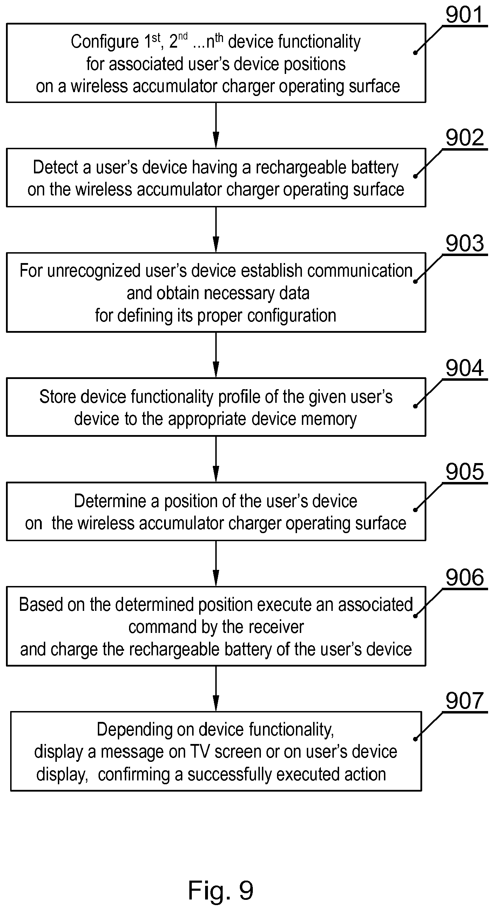

Fig. 9 depicts a high level process implemented by the present invention. At step 901 there are configured 1st, 2nd ... n-th device's functions for associated user's device 270, 310 positions with respect to the receiver 220, in particular, on a wireless accumulator charger operating surface. Next, at step 902, there is detected a user's device 270, 310 having a rechargeable battery in proximity to the receiver 220, in particular on the wireless accumulator charger's operating surface.

Optionally, at step 903, for unrecognized user's device 270, 310 there may be established communication and obtained necessary data e.g. device ID number, MAC address for defining its proper configuration (such configuration may for example comprise information on battery charging parameters or similar). When this happens, there may be stored 904 a user's device 270, 310 functionality profile in the receiver's 220 memory.

At step 905, there is determined a position of the given user's device 270, 310 with respect to the receiver 220 and in particular on the wireless accumulator charger's operating surface. This may be executed in accordance with the method shown with reference to Fig. 7.

At step 906, based on the user's device 270 position there is executed an associated command by the receiver 220. In case the wireless charger is present, the rechargeable battery of the user's device 270. Lastly, at step 907, there may be displayed a message, on a connected display or on user's device display, confirming a successfully executed action.

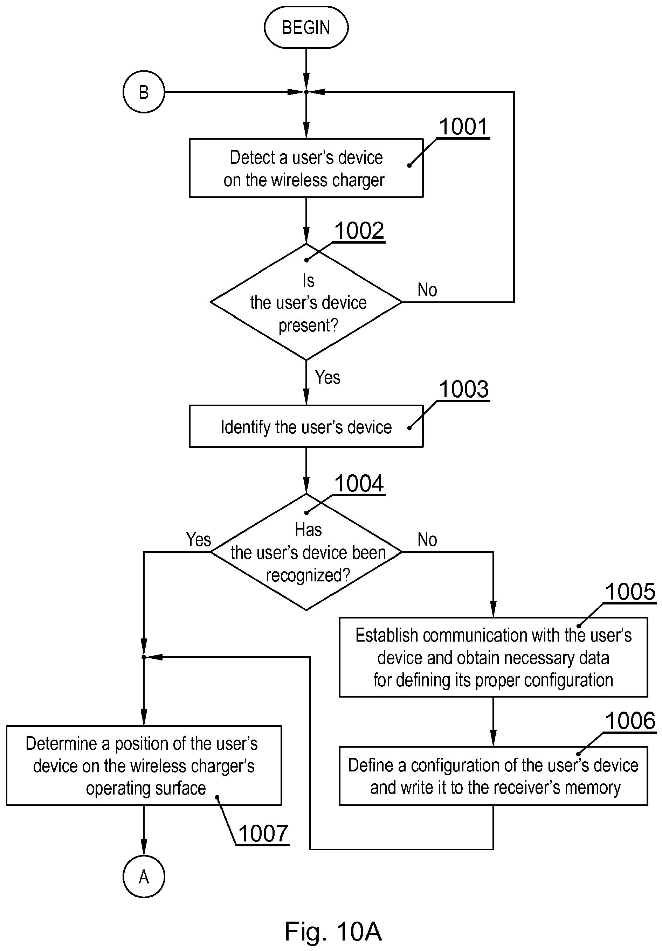

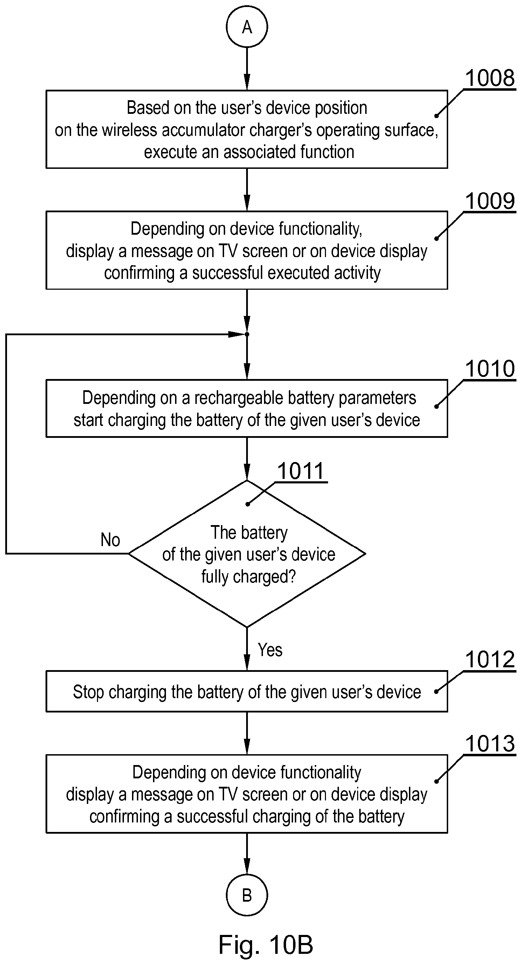

Fig. 10A and Fig. 10B show a more detailed version of Fig. 9 wherein a wireless charger has been used. The method starts at step 1001 from detecting a user's device 270, 310 on the wireless charger. In case the user's device 270, 310 is present 1002 it may be identified 1003.

When the user's device has been recognized 1004, the procedure moves to step 1007 where there is determined a position of the user's device 270, 310 on the wireless charger's operating surface. Otherwise 1005, 1006 there is established a communication with the user's device 270, 310 and obtained necessary data for defining its proper configuration (as defined above).

Further, the procedure moves to step 1008 where, based on the user's device 270, 310 position on the wireless accumulator charger's operating surface, there is execute an associated function. For example, a 90 degrees rotation left (e.g. direction West on the wireless accumulator charger's operating surface) of the user's device 270, 310 results in background recording of the current program and switching to standby.

Execution of said associated function may be signaled with a message 1009, be it audio and/or video message.

Lastly, depending on a rechargeable battery parameters start charging 1010 - 1013 the battery of the given user's device 270, 310.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for switching between states may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for switching between states, the method being **characterized in that** it comprises the step of:
• selecting (701) a given axis of a user's device (310, 270) as its reference axis, the position of which will be checked against the direction to a reference point;
• selecting (703) a given axis of a receiver (220) as its reference axis the position of which will be checked against the direction to the reference point;
• determining (705) the user's device (310, 270) proximity to the receiver (220);
• when said user's device (310, 270) is in proximity to the receiver (220), obtaining (706) by the receiver (220) information on the user's device (310, 270) orientation with respect to its reference point;
• determining (707), by the receiver (220), based on its known orientation, orientation of the user's device (310, 270) with respect to the orientation of the receiver (220) and obtaining a relative angle between the user's device (310, 270) and the receiver (220); and
• based on that relative angle, executing (708) an associated action (641 D).

2. The method according to claim 1 **characterized in that** the reference point is common for both the receiver (220) and the user's device (310, 270) in case each of them comprises a magnetometer.

3. The method according to claim 1 **characterized in that** either reference axis has an assigned direction (702, 704).

4. The method according to claim 1 **characterized in that** said proximity is considered detected when said user's device (310, 270) is connected to a wireless charger of the receiver (220).

5. The method according to claim 1 **characterized in that** the associated action is executed either by the receiver (220) or by the user's device (270, 310) or both devices may execute respectively associated actions.

6. The method according to claim 1 **characterized in that** it further comprises a step of providing a display, presenting at its perimeter indications of commands associated with different positions of the user's device (270, 310) with respect to the receiver (220).

7. The method according to claim 1 **characterized in that** it further comprises a step of signaling, by the receiver (220), that said associated function has been executed (1009).

8. A computer program comprising program code means for performing all the steps of the computer-implemented method according to claim 1 when said program is run on a computer.

9. A computer readable medium storing computer-executable instructions performing all the steps of the computer-implemented method according to claim 1 when executed on a computer.

10. System (220) for switching between states, the system comprising:
• means for determining orientation of the system (220);
• a memory configured to store program code for a controller (610) the system being characterized that
• the controller (610) is configured to execute all steps of the method according to claim 1.

11. The system according to claim 1 **characterized in that** it comprises, on its operating surface, a display configured to present, at its perimeter, indications of commands associated with different positions of a user's device (270, 310) with respect to the system (220).

12. The system according to claim 11 **characterized in that** the display has a shape of a ring wherein the central area is empty.

13. The system according to claim 12 **characterized in that** said empty area is configured to receive said user's device (270, 310) for wireless charging by a wireless charger (690).

14. The system according to claim 10 **characterized in that** said means for determining orientation of the system (220) comprises a magnetometer while the user's device (310, 270) comprises a magnet.
